# EUROPEAN PATENT APPLICATION

(11) **EP 4 024 149 A1**
(43) Date of publication of application: **06.07.2022**
(21) Application number: 20857299.0
(22) Date of filing: 23.06.2020
(51) Int. Cl.: G05B 19/418, G06Q 50/04

(54) **PRODUCTION SYSTEM**

(30) Priority: 26.08.2019 JP 2019153693
(71) Applicant: ISHIDA CO., Ltd., Kyoto-shi, Kyoto 606-8392 (JP)
(72) Inventor: NADA, Taiga, Ritto-shi, Shiga 520-3026 (JP); ABE, Yoichiro, Ritto-shi, Shiga 520-3026 (JP); HATANO, Ryota, Ritto-shi, Shiga 520-3026 (JP); OHTANI, Takafumi, Ritto-shi, Shiga 520-3026 (JP)
(74) Representative: Gill Jennings & Every LLP
(86) International application number: PCT/JP2020/024482
(87) International publication number: WO 2021/039060

(57) **Abstract**

An objective of the present invention is to provide a production system that can easily reference a video pertaining to a specific action or operation of a device. A production system (10) is provided with a log generation unit (51a), a video generation unit (51b), a recording unit (51c), and a control unit (51d). The log generation unit (51a) generates log information pertaining to an action of a device (20) implementing a process and/or log information pertaining to an operation of a worker operating the device (20). The video generation unit (51b) generates video data of an action of the device (20) and/or video data of an operation by the worker. The recording unit (51c) records the log information generated by the log generation unit (51a), in association with the video data generated by the video generation unit (51b). The control unit (51d) controls the recording unit (51c), and causes the recording unit (51c) to record the video data of a time zone in which the log information is used as a reference point, in association with the log information.

## Description

### TECHNICAL FIELD

The present invention relates to a production system that implements at least one process selected from weighing, packaging, inspecting and boxing a food product.

### BACKGROUND ART

Systems that automatically record video of the conditions in which devices operate and in which workers operate the devices have conventionally been used for purposes such as analyzing the cause of an error occurrence. For example, Patent Literature 1 (Japanese Laid-open Patent Publication 2003-150230) discloses a system for confirming the details of a plurality of work processes using a series of images obtained by photographing the conditions under which a device is operated by a worker to assemble a product.

### SUMMARY OF THE INVENTION

### <Technical Problem>

However, with conventional systems, videos in which actions of a device and operation of the device by a worker are recorded are linked with the date and time when the videos were recorded and then saved, and when previous videos are to be referenced, the videos have needed to be searched and retrieved on the basis of the date and time. Therefore, even when a video of a time at which a specific action such as an error occurred in a device is to be referenced, or a video of a time at which a specific operation such as a state restoration was implemented by a worker is to be referenced, the date and time must be specified to reference the video thereof.

Thus, an object of the present invention is to provide a production system with which a video relating to a specific action or operation of a device can be easily referenced.

### <Solution to Problem>

A production system according to a first aspect of the present invention is a system that implements at least one process selected from weighing, packaging, inspecting and boxing a food product. This production system is provided with a log generation unit, a video generation unit, a recording unit, and a control unit. The log generation unit generates log information pertaining to an action of a device implementing the process and/or log information pertaining to an operation of a worker operating the device. The video generation unit generates video data of the action of the device and/or video data of the operation by the worker. The recording unit associates the log information generated by the log generation unit with the video data generated by the video generation unit. The control unit controls the recording unit, and also causes the recording unit to record the video data of a time zone in which the log information is used as a reference point, in association with the log information.

This production system can easily reference video pertaining to a specific action or operation of a device by using log information pertaining to actions of the device or operations by a worker operating the device.

A production system according to a second aspect of the present invention is the production system according to the first aspect, wherein if the log generation unit generates log information pertaining to an action of the device, the reference point is a point in time at which the action of the device is started, or is a point in time at which the action of the device is ended.

A production system according to a third aspect of the present invention is the production system according to the first aspect or second aspect, wherein if the log generation unit generates log information pertaining to an operation by the worker, the reference point is a point in time at which the operation by the worker is started, or is a point in time at which the operation by the worker is ended.

A production system according to a fourth aspect of the present invention is the production system according to any one of the first to third aspects, wherein the control unit causes the recording unit to record video data of a time zone from a point in time prior to the reference point by a predetermined time period to a point in time after the reference point by a predetermined time period, in association with the log information.

A production system according to a fifth aspect of the present invention is the production system according to any one of the first to fourth aspects, further provided with a cloud computer connected to the device through the Internet. The cloud computer has at least one unit selected from the log generation unit, the video generation unit, the recording unit and the control unit.

A production system according to a sixth aspect of the present invention is the production system according to the fifth aspect, further provided with a local computer. The local computer has authority to access the cloud computer and is connected to the device through a local line.

A production system according to a seventh aspect of the present invention is the production system according to any one of the first to sixth aspects, further provided with a detection unit and a specification unit. The detection unit detects a test piece inserted into the device by the worker. The specification unit specifies, on the basis of the video data, the test piece and the worker who inserted the test piece. The control unit also associates an action of detecting the test piece by the detection unit with the test piece and worker specified by the specification unit, and causes the recording unit to record the associated action, test piece, and worker.

A production system according to an eighth aspect of the present invention is the production system according to any one of the first to seventh aspects, wherein the video generation unit acquires, from a number of imaging apparatuses corresponding to a type of log information, video data of a time length corresponding to the type of log information.

A production system according to a ninth aspect of the present invention is the production system according to any one of the first to eighth aspects, wherein the control unit causes the recording unit to record video data of a plurality of time zones in association with log information.

### <Advantageous Effects of Invention>

A production system according to the present invention can easily reference video pertaining to a specific action or operation of a device.

### BRIEF DESCRIPTION OF THE DRAWINGS

FIG. 1 is a schematic block diagram of a production system 10 according to a first embodiment.
FIG. 2 is a block diagram of a control terminal 50.
FIG. 3 is an example of log information generated by a log generation unit 51a.
FIG. 4 is a flowchart of actions of the production system 10.
FIG. 5 is an example of a video confirmation screen displayed on an operation terminal 60.
FIG. 6 is a block diagram of a control terminal 50 of a second embodiment.
FIG. 7 is an example of a form in which check results of a metal detector are entered.

### DESCRIPTION OF EMBODIMENTS

### First Embodiment

A first embodiment of the present invention shall now be described with reference to the drawings. The embodiments described below are merely specific examples of the present invention, and do not limit the technical scope of the present invention.

### (1) Overall configuration of production system 10

A production system 10 according to the present embodiment implements at least one process selected from weighing, packaging, inspecting and boxing a food product. The production system 10 is installed in a facility that produces a food product such as a confectionery. The facility in which the production system 10 is installed is provided primarily with a factory 101, a control room 102, and an office 103. In the factory 101, a production line for production of a food product is installed, and work such as weighing, packaging, inspecting and boxing the food product is implemented by a worker, etc. In the control room 102, work such as controlling the production line and managing maintenance is implemented by a manager or other such person having a predetermined authority. In the office 103, work such as acquiring operation information regarding the production line is implemented by a worker, a manager, and the like.

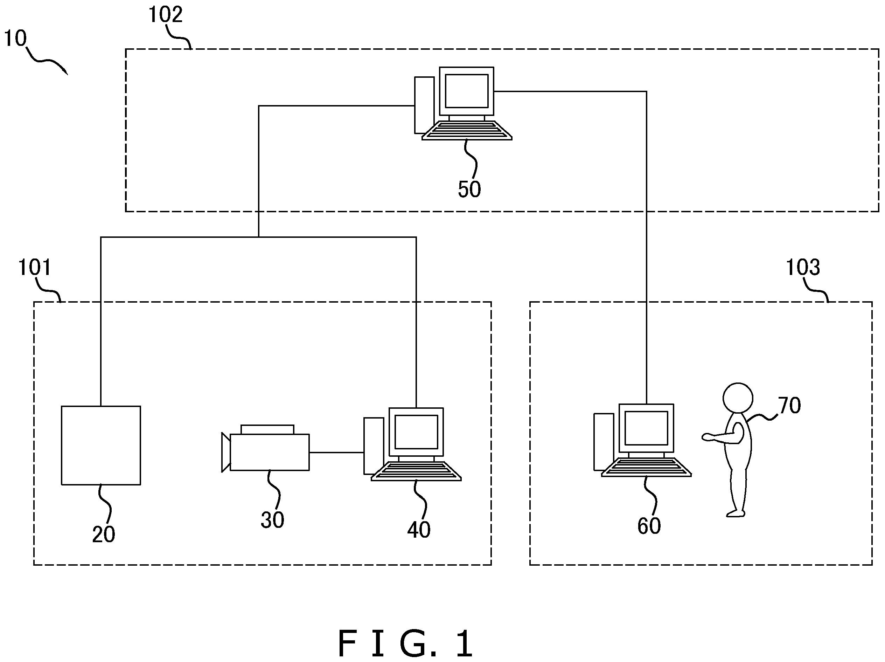

FIG. 1 is a schematic block diagram of the production system 10. The production system 10 is provided primarily with a device 20, a camera 30, a recording terminal 40, a control terminal 50, and an operation terminal 60. The device 20, the camera 30 and the recording terminal 40 are installed in the factory 101, the control terminal 50 is installed in the control room 102, and the operation terminal 60 is installed in the office 103.

The device 20 is an apparatus that is attached to the production line to implement various processes with respect to the food product. The device 20 is, for example, a scale for food products, a packaging device for food products, an inspection apparatus for packaged food products, or a boxing apparatus for packaged food products. One or a plurality of devices 20 may be installed in the factory 101, and a worker operates the device 20 in the factory 101.

The camera 30 (imaging apparatus) captures video pertaining to an action of the device 20 or an operation of a worker operating the device 20 in the factory 101. Video refer to an image or moving image, and a moving image is a moving image with sound or a moving image without sound. One or a plurality of cameras 30 may be installed in the factory 101. The camera 30 photographs conditions of the device 20 in action and conditions of the worker operating the device 20 and converts the photographed conditions to predetermined data. A single device 20 may be photographed by a plurality of cameras 30, or a plurality of devices 20 may be photographed by a single camera 30.

The recording terminal 40 is a computer that connects to the camera 30. The recording terminal 40 controls the camera 30 and records and accumulates videos captured by the camera 30. The recording terminal 40 is provided with a large capacity HDD and a large capacity SSD for accumulating video as video data.

The control terminal 50 is a computer that functions as a server. The control terminal 50 is connected wirelessly or by wires to the device 20, the recording terminal 40 and the operation terminal 60, and transmits and receives various data to and from the device 20, the recording terminal 40 and the operation terminal 60. The control terminal 50 is operated by a person such as a manager having a predetermined authority.

The operation terminal 60 is, for example, a personal computer and is operated by an operator 70 having a predetermined authority. The operator 70 is, for example, a manager, a worker working in the factory 101, or an employee working in the facility where the production system 10 is installed.

The recording terminal 40 and the operation terminal 60 function as a client of the control terminal 50 that functions as a server.

### (2) Detailed description of control terminal 50

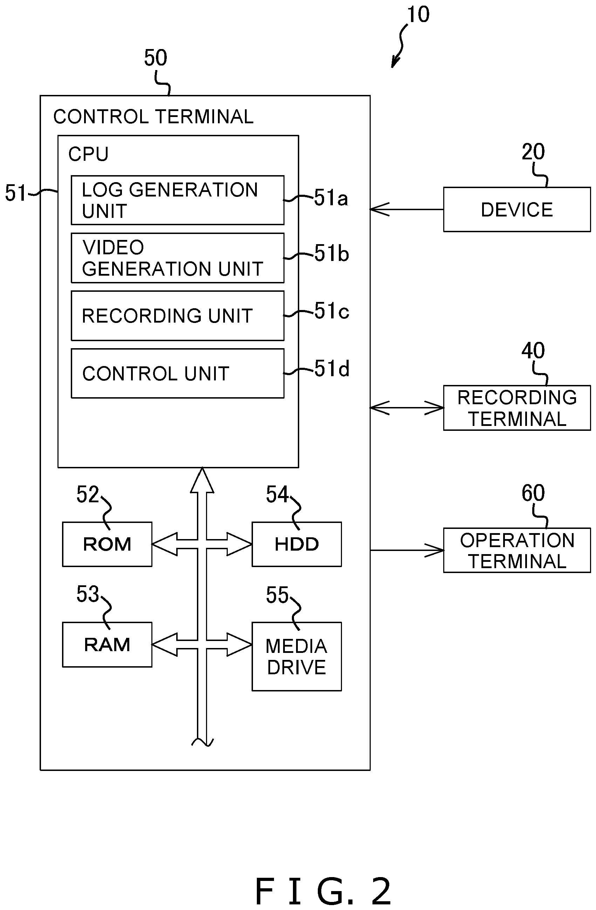

FIG. 2 is a block diagram of the control terminal 50. The control terminal 50 is configured primarily by a CPU 51, ROM 52, RAM 53, a hard disk drive (HDD) 54, and a media drive 55, etc., and all of the elements 51-55 of the control terminal 50 are mutually connected through a bus line such as an address bus or a data bus. A solid-state drive (SSD) may be used in place of the HDD 54. The media drive 55 is an apparatus for writing data from a storage media such as a CD-ROM or USB memory when the storage media is inserted into the media drive 55. The ROM 52, the RAM 53, the HDD 54, and the storage media inserted into the media drive 55 are non-transitory recording media.

The CPU 51 executes various programs stored in the ROM 52, the HDD 54 and the storage media, and by reading and executing these programs, the CPU 51 acts as a log generation unit 51a, a video generation unit 51b, a recording unit 51c and a control unit 51d. These elements 51a-51d are formed from command sets that can be executed by the CPU 51, and are predetermined functions that are realized by the control terminal 50.

### (2-1) Log generation unit 51a

The log generation unit 51a generates log information (device log information) pertaining to an action of the device 20 implementing a process on a food product in the factory 101 and/or log information (operation log information) pertaining to an operation of the device 20 by a worker. The log information generated by the log generation unit 51a is temporarily saved in the HDD 54, etc.

The log information includes, for example, a time, an identifier (ID), and data. The time is, for example, the time at which the log information was generated, or the time at which the log information was saved to the HDD 54, etc. The identifier is a numerical value or character string for uniquely identifying the log information. The data is information pertaining to a specific action of the device 20 in the case of device log information, or is information pertaining to a specific operation by the worker in the case of operation log information. In the case of device log information, the data is, for example, error information outputted by the device 20, and in the case of operation log information, the data is, for example, an identifier of a button of the device 20 pressed by the worker, and coordinates of a touch panel of the device 20 touched by the worker.

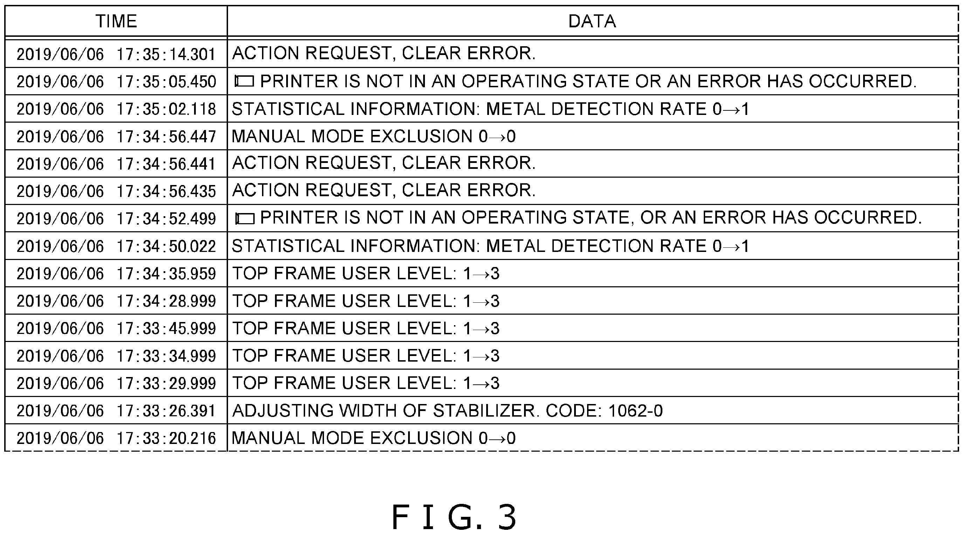

FIG. 3 is an example of log information generated by the log generation unit 51a. In FIG. 3, device log information and operation log information are both aligned in order of the time in which the log information was generated or saved. As shown in FIG. 3, the log generation unit 51a may output the device log information and the operation log information together without differentiating the two. Alternatively, the log generation unit 51a may separately output the device log information and operation log information. In FIG. 3, each piece of log information includes the time and data.

In FIG. 3, if video data associated with log information exists, a camera icon is shown in the row pertaining to that log information. The camera icon is shown at the left side of the data of the log information. The operator 70 can easily determine whether video data associated with log information is present by confirming the presence or lack of the camera icon.

### (2-2) Video generation unit 51b

The video generation unit 51b generates video data of an action of the device 20 and/or video data of an operation by the worker. The video generation unit 51b acquires video accumulated in the recording terminal 40 and generates video data.

The video generation unit 51b acquires, from a number of cameras 30 corresponding to the type of log information, video data of a time length corresponding to the type of log information. For example, if a plurality of cameras 30 that photograph the action of a certain device 20 or the work of a certain worker are present, the video generation unit 51b acquires video data of a predetermined time length on the basis of videos captured by each of the plurality of cameras 30.

### (2-3) Recording unit 51c

The recording unit 51c records the log information generated by the log generation unit 51a, in association with the video data generated by the video generation unit 51b. The log information and video data are associated by the control unit 51d. The recording unit 51c records the log information in association with video data on the basis of a process result of the control unit 51d.

### (2-4) Control unit 51d

The control unit 51d implements a process pertaining to associating the log information and video data. The control unit 51d associates video data of a time zone in which the log information generated by the log generation unit 51a is used as a reference point, with the log information thereof, the video data being generated by the video generation unit 51b, and causes the recording unit 51c to record the associated video data. The video data to be associated with the log information is at least a portion of video data generated by the video generation unit 51b. If the log generation unit 51a generates device log information, the reference point is a point in time at which an action of the device 20 is started or a point in time at which the action of the device 20 is ended. If the log generation unit 51a generates operation log information, the reference point is a point in time at which an operation by the worker is started or a point in time at which the operation by the worker is ended. The video data of the time zone in which the log information is used as a reference point is, for example, video data of a time zone from a point in time prior to the reference point by a predetermined time period to a point in time after the reference point by a predetermined time period.

### (3) Actions of production system 10

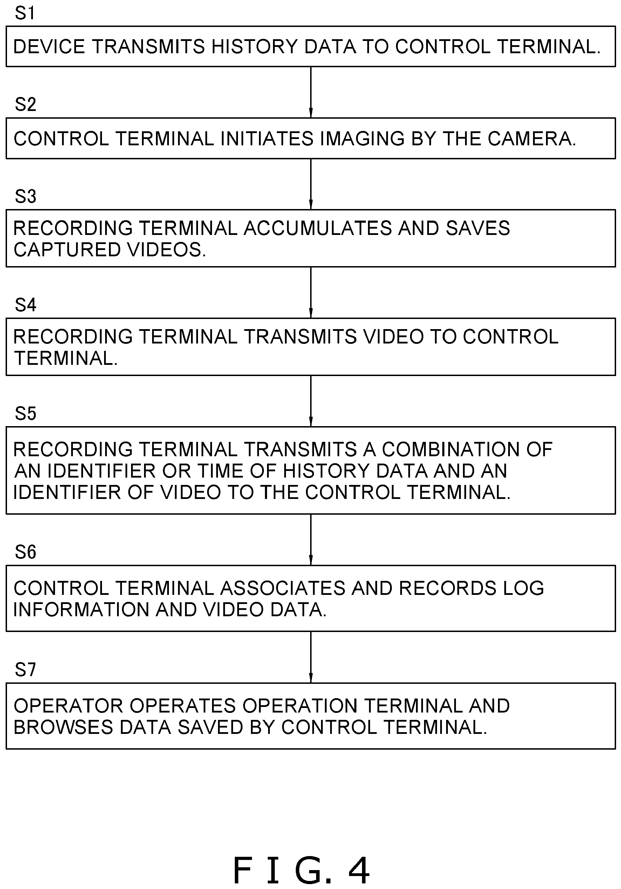

FIG. 4 is a flowchart of actions of the production system 10. FIG. 4 presents steps in which the control terminal 50 associates and records log information and video data, and the operation terminal 60 displays video data pertaining to a specific action or operation of the device 20.

The device 20 in the factory 101 is connected to the control terminal 50 in the control room 102. While the production line in the factory 101 is running, the device 20 collects data pertaining to an action of the device 20 and an operation by a worker and transmits the collected data as history data to the control terminal 50 (step S1). The history data is data that serves as the foundation of each item of log information shown in FIG. 3. The history data includes data pertaining to the time at which the history data was created.

Next, on the basis of the history data received from the device 20, the control terminal 50 controls the recording terminal 40 in the factory 101 and initiates imaging by the camera 30 (step S2). That is, with history data being used as a trigger, the control terminal 50 initiates the capturing of video pertaining to an action of the device 20 and an operation of a worker. At this time, the control terminal 50 transmits the history data that served as a trigger to the recording terminal 40. Furthermore, an identifier is assigned to each history data by the control terminal 50.

Next, the recording terminal 40 accumulates and saves the video captured by the camera 30 (step S3). The recording terminal 40 saves the video in association with the identifier uniquely assigned to that video. The identifier of the video may be assigned by the recording terminal 40, or may be assigned by the control terminal 50 in step S2 and then transmitted to the recording terminal 40.

Next, the recording terminal 40 transmits, to the control terminal 50, the video that was captured by the camera 30 and saved (step S4).

Next, the recording terminal 40 transmits, to the control terminal 50, a combination of the identifier or time included in the history data received from the control terminal 50 and the identifier of the video captured and saved when triggered by the history data thereof (step S5). The identifier of the video in step S5 may be transmitted separately from or simultaneously with the transmission of the video in step S4.

Next, the control terminal 50 generates log information and video data, respectively, from the history data and video received from the recording terminal 40, and associates and records the log information and video data (step S6). Through this, the control terminal 50 can associate and save history data and the identifier thereof, as well as video corresponding to that history data and the identifier thereof.

The operation terminal 60 in the office 103 is connected to the control terminal 50 in the control room 102. The operator 70 of the operation terminal 60 can operate the operation terminal 60 and browse data saved by the control terminal 50 (step S7).

The operator 70 selects, from a list of log information (refer to FIG. 3) displayed on a screen of the operation terminal 60, log information having a video that the operator 70 wants to confirm. When the log information is selected, a video confirmation screen is displayed on the display of the operation terminal 60. Data pertaining to the selected log information and video data associated with that log information are displayed on the video confirmation screen.

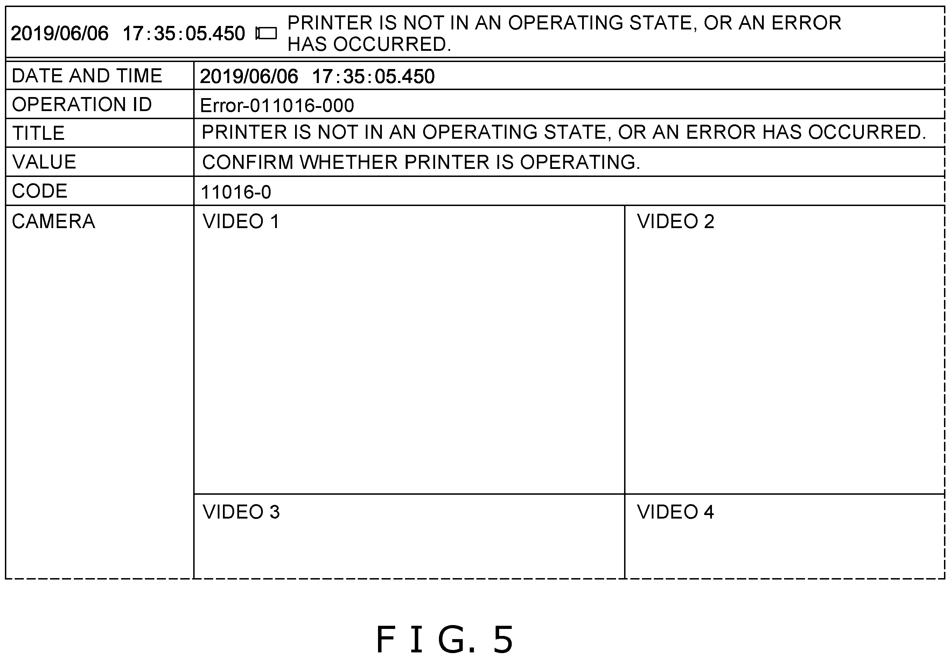

FIG. 5 is an example of the video confirmation screen displayed on the operation terminal 60. In FIG. 5, log information and video associated with that log information are displayed. By operating the video confirmation screen shown in FIG. 5, the operator 70 can confirm videos of the action of the device 20 and of operations by a worker. If the video is a moving image, the operator 70 can operate the video confirmation screen and implement various operations such as playing back the video.

In the video confirmation screen of FIG. 5, data pertaining to the log information selected from the list of log information shown in FIG. 3 is shown in the uppermost field. Detailed data of the log information is shown in the "Date and Time", "Operation ID", "Title", "Value" and "Code" fields below the uppermost field. The identifier of the log information is entered in the "Operation ID" field. For a case in which, for example, the log information pertains to the occurrence of an error, the method for resolving that error is described in the "Value" field. An error code is entered in the "Code field" for a case in which, for example, the log information pertains to the occurrence of an error. The lowermost "Camera" field is an area for video data associated with the log information. In FIG. 5, four video data (videos 1-4) associated with the log information are shown, and the operator 70 can individually play back and confirm each video data.

### (4) Features

With the production system 10, the operator 70 of the operation terminal 60 can specify, on the basis of log information, the video that was the primary factor for recording the log information thereof. Therefore, with the production system 10, the operator 70 can easily reference an operation video pertaining to a specific action or operation of the device 20. Accordingly, the production system 10 can reduce the burden and mistakes of the operator 70 when referencing an operation video.

### Second Embodiment

A production system 10 according to a second embodiment of the present invention shall now be described. The basic configuration, actions, and features of the present embodiment are the same as those of the production system 10 according to the first embodiment, and thus differences from the first embodiment are primarily described.

### (1) Detailed description of control terminal 50

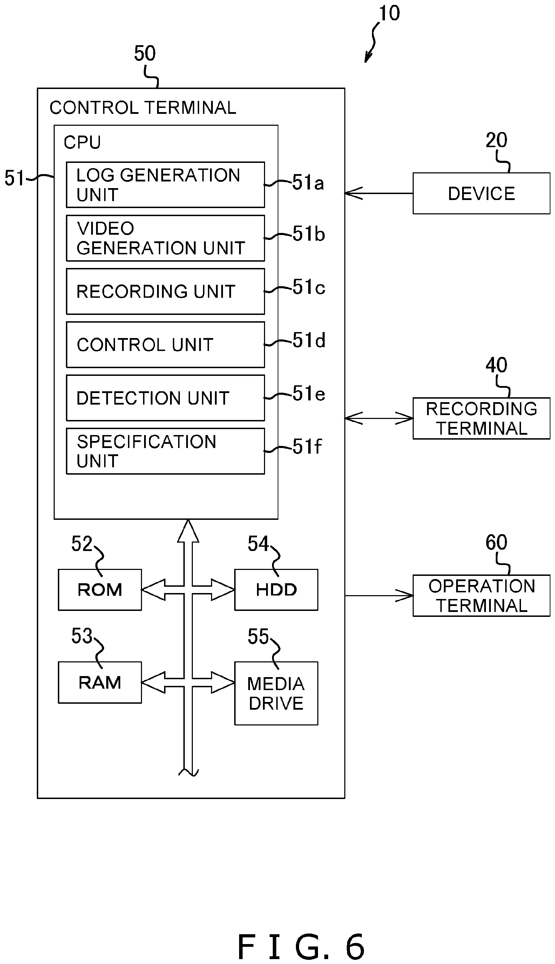

FIG. 6 is a block diagram of a control terminal 50 of the present embodiment. Compared to the block diagram of the control terminal 50 of the first embodiment in FIG. 2, the block diagram of FIG. 6 differs only in terms of the elements included in the CPU 51. Compared with the first embodiment, the CPU 51 of the present embodiment acts also as a detection unit 51e and a specification unit 51f. The detection unit 51e and the specification unit 51f are formed from command sets that can be executed by the CPU 51, and are predetermined functions that are realized by the control terminal 50.

### (1-1) Detection unit 51e

The detection unit 51e detects a test piece inserted into the device 20 by a worker. The device 20 is a metal detector for detecting metal included in an article produced in the production line. For example, if a film-packaged food product is produced in the production line, the metal detector detects whether metallic foreign matter that should be removed is present inside a bag in which the food product is packaged. In this case, the metal detector is attached to the packaging device used to package the food product.

Control standards for verifying that the metal detector (device 20) can operate with sufficient sensitivity and remove metallic foreign matter are established. Examples of control standards include "can sense and remove stainless steel of 3.5 mm or greater and iron of 2.5 mm or greater". A test piece is used to check whether the metal detector satisfies a predetermined control standard. The test piece is, for example, a metal piece made of iron or stainless steel, and various information such as the material, model number, weight, and dimensions of the test piece is recorded on the test piece. A check of the metal detector using the test piece is implemented in the production line before beginning production, during production, and after production is ended. The worker inserts the test piece through an insertion port of the metal detector and checks to determine whether the metal detector satisfies a predetermined control standard.

If the metal detector (device 20) has detected metallic foreign matter, the metal detector transmits a predetermined detection signal to the control terminal 50. On the basis of the detection signal received from the metal detector, the detection unit 51e of the control terminal 50 detects metallic foreign matter or the test piece inserted into the device 20.

### (1-2) Specification unit 51f

On the basis of video data, the specification unit 51f specifies the test piece and the worker (test piece-inserting person) who inserted the test piece. Specifically, the specification unit 51f analyzes video data and specifies the test piece and test piece-inserting person included in the video captured by the camera 30.

In the present embodiment, moving images of the metal detector (device 20) in action are captured by a plurality of cameras 30. One of the cameras 30 is installed in the vicinity of the insertion port of the metal detector at a location at which the test piece can be reliably photographed. The moving image captured by this camera 30 is used to discern the type of test piece and to discern whether a test piece was inserted. Another one of the cameras 30 is installed at a discharge section of the packaging device to which the metal detector is attached, and for example, is used to discern whether a series of multiple bags in which commodities are packaged was discharged.

The specification unit 51f uses still image analysis technology and moving image analysis technology to specify the test piece and the test piece-inserting person. The specification unit 51f may also analyze video using a machine learning technique such as pattern recognition to specify the test piece and the test piece-inserting person.

For example, in order to specify the test piece-inserting person (worker checking the action of the metal detector), an employee identification card on which an employee number and name are written is attached in advance to the test piece-inserting person. From video captured by a camera 30 installed at a position at which the employee identification card can be photographed, the specification unit 51f recognizes characters included on the employee identification card and specifies the test piece-inserting person. Methods that may be used to specify the test piece-inserting person include facial recognition, iris authentication, or fingerprint authentication. In the case of a test piece, the specification unit 51f may also recognize the characters recorded on the test piece and thereby specify the test piece.

### (2) Actions of production system 10

A worker checking the action of the metal detector (device 20) first brings a test piece close to an insertion port of a packaging machine to which a metal detector is attached. At this time, the specification unit 51f specifies the test piece and the worker on the basis of video captured by the camera 30.

Next, the worker inserts the test piece into the insertion port of the packaging machine and checks the action of the metal detector. A time period from when the test piece is inserted into the packaging machine until the test piece is discharged from the packaging machine is determined by a setting of the packaging machine. Therefore, even in a case in which insertion of the test piece and insertion of an actual metallic foreign matter have occurred in a short time interval, the detection unit 51e can differentiate between the test piece and the actual metallic foreign matter. That is, the detection unit 51e can detect a test piece inserted into the packaging machine. The worker may also check the action of the metal detector by inserting a plurality of test pieces of different types into the packaging machine.

In the present embodiment, the control unit 51d associates the action of detecting a test piece by the detection unit 51e with the test piece and worker (test piece-inserting person) specified by the specification unit 51f and causes the recording unit 51c to record the associated information. Specifically, the control unit 51d automatically creates a form in which the check results of the metal detector are entered.

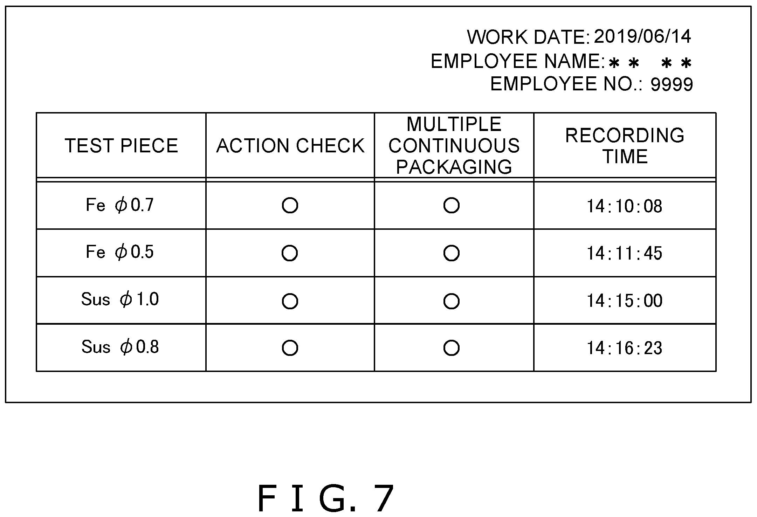

FIG. 7 is an example of the form in which the check results of the metal detector are entered. The date (work date) on which the check work was implemented, the person (employee number and name of the worker) who implemented the check work, and a check results table are entered in the form shown in FIG. 7. The check results table includes, for each type of test piece that was used in the check, data regarding an "action check", "multiple continuous packaging" and a "recording time". The "action check" data pertains to a check result obtained using a test piece. The "multiple continuous packaging" data pertains to a check result of articles discharged from the packaging device. Here, the "multiple continuous packaging" data pertains to a check result with regard to whether the discharged articles are in a state of a continuous series of a predetermined number of bags. If the check result is normal, "O" mark is entered into the "action check" and the "multiple continuous packaging" fields, and if the check result is not normal, an error number, etc. is entered. The time at which the abovementioned check result was obtained is entered in the "recording time" field.

### (3) Features

In a factory 101 in which a metal detector (device 20) is a critical control point (CCP), a predetermined control standard is necessary for the CCP. Therefore, the metal detector must be periodically checked using a test piece. In order to maintain a record of the results of the metal detector check as a recorded document, the results of the metal detector check are recorded in a form. However, work to create a large quantity of forms through manpower takes time and is costly, and there is also a concern that recording mistakes could occur.

However, in the present embodiment, the control unit 51d can automatically create a ledger in which the results of work to check the metal detector using a test piece are recorded. Therefore, the production system 10 can reduce the time required to create a form for a CCP.

### Modifications

Embodiments of the present invention were described above, but the present invention is not limited to the above embodiments; various modifications can be made within a scope that does not depart from the spirit of the present invention. For example, at least one of the modifications described below can be applied to the present invention.

### (1) Modification A

In the embodiments described above, the control terminal 50 is installed in a control room 102 inside a facility in which the production system 10 is installed, and the operation terminal 60 is installed in an office 103 inside the facility. However, the control terminal 50 need not be installed inside a facility in which the production system 10 is installed. For example, a cloud computer may be used in place of the control terminal 50. In this case, the cloud computer is connected through the Internet to the device 20, the recording terminal 40 and the operation terminal 60. The cloud computer has a function of at least one unit selected from the log generation unit 51a, the video generation unit 51b, the recording unit 51c and the control unit 51d. Therefore, with the present modified example, processes such as generating log information and video data, and associating log information and video data are implemented by the cloud computer outside of the facility in which the production system 10 is installed. A cloud service may also be used in place of the cloud computer.

With the present modification, the operation terminal 60 is a local computer installed inside the facility in which the production system 10 is installed. The operation terminal 60 has predetermined authority to access the cloud computer, and is connected to the device 20 through a local line.

### (2) Modification B

In the embodiments described above, the control unit 51d associates video data generated by the video generation unit 51b with log information generated by the log generation unit 51a, the video data thereof being video data of a time zone in which the log information generated by the log generation unit 51a is used as a reference point, and causes the recording unit 51c to record the video data associated with the log information. However, the video data used by the control unit 51d for association with the log information may be configured from video data of a plurality of time zones. For example, the video data may be video data obtained by connecting videos of a plurality of mutually separated time zones.

### INDUSTRIAL APPLICABILITY

The production system according to the present invention can easily reference video pertaining to a specific action or operation of a device and is therefore useful.

### REFERENCE SIGNS LIST

- 10: Production system
- 20: Device
- 30: Camera (imaging apparatus)
- 51a: Log generation unit
- 51b: Video generation unit
- 51c: Recording unit
- 51d: Control unit
- 51e: Detection unit
- 51f: Specification unit

### CITATION LIST

### PATENT LITERATURE

Patent Literature 1: Japanese Laid-open Patent Publication 2003-150230

## Claims

1. A production system that implements at least one process selected from weighing, packaging, inspecting and boxing a food product, the production system comprising:
a log generation unit that generates log information pertaining to an action of a device implementing the process and/or log information pertaining to an operation of a worker operating the device;
a video generation unit that generates video data of the action of the device and/or
video data of the operation by the worker;
a recording unit that records, in association with the video data generated by the video generation unit, the log information generated by the log generation unit; and
a control unit that controls the recording unit,
the control unit causing the recording unit to record the video data of a time zone in which the log information is used as a reference point, in association with the log information.

2. The production system according to claim 1, wherein
if the log generation unit generates the log information pertaining to an action of the device, the reference point is a point in time at which the action of the device is started, or is a point in time at which the action of the device is ended.

3. The production system according to claim 1 or 2, wherein
if the log generation unit generates the log information pertaining to an operation by the worker, the reference point is a point in time at which the operation by the worker is started, or is a point in time at which the operation by the worker is ended.

4. The production system according to any one of claims 1 to 3, wherein
the control unit causes the recording unit to record the video data of a time zone from a point in time prior to the reference point by a predetermined time period to a point in time after the reference point by a predetermined time period, in association with the log information.

5. The production system according to any one of claims 1 to 4, further comprising:
a cloud computer connected to the device through the Internet,
the cloud computer having at least one unit selected from the log generation unit, the video generation unit, the recording unit and the control unit.

6. The production system according to claim 5, further comprising:
a local computer connected to the device through a local line and having authority to access the cloud computer.

7. The production system according to any one of claims 1 to 6, further comprising:
a detection unit that detects a test piece inserted into the device by the worker; and
a specification unit that specifies, on the basis of the video data, the test piece and the worker who inserted the test piece,
the control unit also associating an action of detecting the test piece by the detection unit with the test piece and worker specified by the specification unit, and causing the recording unit to record the associated action, test piece, and worker.

8. The production system according to any one of claims 1 to 7, wherein
the video generation unit acquires, from a number of imaging apparatuses corresponding to a type of log information, the video data of a time length corresponding to the type of log information.

9. The production system according to any one of claims 1 to 8, wherein
the control unit causes the recording unit to record the video data of a plurality of time zones in association with the log information.
